# EUROPÄISCHE PATENTSCHRIFT

(11) **EP 0 564 820 B1**
(45) Veröffentlichungstag und Bekanntmachung des Hinweises auf die Patenterteilung: **06.09.1995**
(21) Anmeldenummer: 93103515.8
(22) Anmeldetag: 05.03.1993
(51) Int. Cl.: B29C 47/66, B29C 47/62

(54) **Stiftzylinderextruder**
Pin-barrel extruder
Extrudeuse avec cylindre à picots

(30) Priorität: 20.03.1992 DE 4209179
(43) Veröffentlichungstag der Anmeldung: 13.10.1993
(73) Patentinhaber: PAUL TROESTER MASCHINENFABRIK, D-30519 Hannover (DE)
(72) Erfinder: Klein, Heinz, W-3017 Pattensen (DE); Gohlisch, Hans-Joachim, Dipl.-Ing., W-3000 Hannover 81 (DE)
(74) Vertreter: Junius, Walther, Dr.

(56) Entgegenhaltungen:
- DE-A- 1 529 813
- DE-A- 2 235 784
- US-A- 3 445 890
- US-A- 3 590 430
- US-A- 5 071 256
- PATENT ABSTRACTS OF JAPAN vol. 7, no. 187 (M-236)(1332) 16. August 1983 & JP-A-58 89 341 (TOSHIBA KIKAI K.K.)
- GUMMI, FASERN, KUNSTSTOFFE Bd. 44, Nr. 8, August 1991, STUTTGART, DE Seite 443, XP287700 '"Neues Extrudersystem: der Stift-Convert-Extruder"'

## Beschreibung

Die Erfindung betrifft einen Stiftzylinderextruder, bestehend aus einem Zylinder und einer in diesem rotierbar gelagerten Schnecke mit einem das Extrudat förderndem Gewinde, in welches in Radialebenen Nuten eingeschnitten sind, in welche im oder am Zylinder befestigte, in den Zylinder radial hineinragende Stifte eingreifen.

Stiftzylinderextruder sind seit etwa zwei Jahrzehnten im Einsatz. Ein Beispiel für diese Extruder ist in der DE-A-22 35 784 gezeigt. Bei Stiftzylinderextrudern sind die Schneckenstege an den Stellen durch eine Nut unterbrochen, an denen die Stifte radial sich durch den Zylinder erstrecken und in den Innenraum des Zylinders hineinragen. Stiftzylinderextruder brachten seinerzeit einen erheblichen Fortschritt bei der Arbeit des Aufschließens und des Plastifizierens von Kautschukmischungen und Kunststoffen. Doch konnten sie das Problem, schwer aufschließbare oder plastifizierbare gröbere Materialbrocken rasch zu zerkleinern und dadurch den Aufschließ- bzw. Plastifiziervorgang zu beschleunigen, nicht lösen. Diese groben Materialbrocken hingegen bereiteten den Stiftzylinderextrudern immer Schwierigkeiten, weil durch deren Anwesenheit in den Schneckengängen erhebliche Biegekräfte auf die Stifte ausgeübt wurden, welche bis zum Stiftbruch führen konnten.

Daher ging man an den Aufschluß und die Plastifizierung dieser Materialbrocken mit anderen Mitteln heran: Durch die DE-C-910 218 war es durch eine besondere Gestaltung der Schnecke bei einem stiftlosen Extruder möglich geworden, grobe Materialbrocken bis zu ihrem vollständigen Aufschluß im mittleren Bereich des Extruderzylinders so lange zurückzuhalten, bis auch sie vollständig aufgeschlossen und plastifiziert waren. Das gelang durch einen zweigängigen mittleren Teil der Extruderschnecke. Der eine Gang, in den alles aus dem Einzugsbereich ankommende Material einfloß, verengte sich von einem Maximalwert auf Null, während der parallele zweite Gang sich von Null auf einen Maximalwert erweiterte. Getrennt waren die beiden Gänge durch einen wulstförmigen Schneckensteg, über den alles Material auf dem Weg vom Einzug zum Ausstoß herübertreten mußte. Durch die Wulstform entstand ein sich keilförmig verengender Spalt, in welchem grobe Materialbrocken zerquetscht und zerrieben wurden. Diese Schnecke zeigt eine hervorragende Aufschluß- und Plastifizierwirkung, ihre Ausstoßleistung läßt jedoch zu wünschen übrig, weil der Strom des plastifizierten Materials durch unplastifiziertes Material gehemmt wird.

Ähnlich wirken kurze Scherteile, wie sie beispielsweise durch die FR-A-15 56 877 bekannt geworden sind, die aber leichter in der Fertigung herstellbar sind.

Eine Verbesserung der Ausstoßleistung bei gleichzeitiger Verbesserung der Aufschluß- und Plastifizierwirkung wurde durch eine aus der US-A-3 006 029 bekannt gewordenen Schnecke erzielt, in deren Windungen ein weiteres Gewinde höherer Gangzahl und größerer Steigung eingeschnitten war. Durch die Gewindenuten dieses zusätzlich eingeschnittenen Gewindes konnten die aufgeschlossenen und hinreichend plastifizierten Teile des Extrudats schneller von einer Schneckenwindung zur nächsten und somit schneller zum Ausstoßbereich gelangen. In den Windungen des Hauptganges hingegen verblieben die unaufgeschlossenen Materialbrocken, die somit über einen längeren Weg zur Ausstoßzone geführt wurden und auf diesem längeren Weg länger der Plastifizierwirkung der Schnecke ausgesetzt waren, die noch dadurch erhöht wurde, daß die groben Materialbrocken an den Gewindeflanken durch die scharfen Kanten des übergeschnittenen weiteren Gewindes verstärkt abgearbeitet wurden. Aber auch hier laufen schwer aufschließbare grobe Materialbrocken bis in die Ausgangszone der Schnecke, weil niemand und nichts sie aufhält.

Alle diese beschriebenen Ausführungen von Extrudern werden nebeneinander seit zwei und drei Jahrzehnten benutzt. Sie alle haben ihre bestimmten Vorteile, aber auch ihre gravierenden Nachteile, weil es nicht gelingt, ohne Verminderung der Ausstoßleistung schwer aufschließbare Materialanteile schnell und auf kurzer Schneckenlänge aufzuschließen und zu plastifizieren und so zu gut homogenisierten Extrudaten zu gelangen.

Zu den Versuchen des Standes der Technik, durch Kombination von bekannten Maßnahmen die Homogenisier-, Plastifizier- und Aufschließwirkung zu erhöhen, gehört auch die DE-A-30 03 615. Hier sind vor den Stiftebenen Schneckenabschnitte mit einer vergrößerten Gangzahl angeordnet. Grobe Materialbrocken bleiben hier vor den in der Gangzahl vergrößerten Schneckenabschnitten hängen und vermindern dadurch die Durchtrittsmöglichkeiten für plastifiziertes Material. Das führt zu einer Verminderung der Ausstoßleistung und zu erheblichen Temperaturerhöhungen im Bereich vor den vielgängigen Schneckenabschnitten, bringt aber den für die meisten Hersteller und Anwender uninteressanten Vorteil mit sich, daß die Stifte nur wenig beansprucht werden und daher auch Stifte verwendet werden können, die unter normalen Bedingungen bruchgefährdet wären.

Ein weiterer Versuch in dieser Richtung ist durch die DE-C-40 39 942 bekannt geworden: Hinter den mit Stiften versehenen Schneckenabschnitt wird ein als Transfermix in der Fachwelt für hervorragende Homogenisier-, Plastifizier- und Aufschlußwirkungen bekannt gewordener Schneckenabschnitt geschaltet, so daß sich erwartungsgemäß die Homogenisier-, Plastifizier- und Aufschließeigenschaften der beiden bekannten Schneckenabschnitte addieren. Der Nachteil eines Transfermix-Schneckenabschnittes liegt in seiner schwierigen und aufwendigen Herstellung nicht nur an der Schnecke selbst, sondern auch im entsprechenden Zylinderabschnitt. Dieser Nachteil wird hier bewußt bei der Hintereinanderschaltung der zwei bekannten Maßnahmen zur Verbesserung der Homogenisier-, Plastifizier- und Aufschließeigenschaften in Kauf genommen, weil es eben keine anderen Möglichkeiten gibt, um die gesetzten Ziele zu erreichen.

Es ist die Aufgabe der Erfindung, eine einfache Möglichkeit zu schaffen, um ohne Verschlechterung der Ausstoßleistung grobe Materialanteile auf kurzem Wege aufzuschließen und zu plastifizieren und so auf kurzem Wege zu hervorragend homogenisierten Extrudaten zu gelangen.

Diese Aufgabe wird nach der Erfindung durch einen Stiftzylinderextruder gemäß Anspruch 1 gelöst.

Zweckmäßige Weiterbildungen der Erfindung sind in den abhängigen Ansprüchen 2 bis 6 beschrieben.

Die Erfindung greift hierzu auf zwei bekannte Arten der Plastifizierung zurück und vereinigt diese in einer Weise, daß auf kurzer Schneckenlänge ohne Behinderung des Abflusses plastifizierter Materialteile schwer aufschließbare und plastifizierbare Teile auf kurzer Schneckenlänge aufgeschlossen und plastifiziert werden.

Die Erfindung besteht darin, daß bei einem Stiftzylinderextruder der eingangs genannten Art beidseits mindestens einer Stiftebene in das Gewinde der Schnecke ein weiteres Gewinde höherer Gangzahl und größerer Steigung, aber niedrigerer Gangtiefe und vorzugsweise auch niedrigerer Gangbreite eingeschnitten ist.

Durch diese Kombination wird überraschenderweise erreicht, daß die Plastifizierwirkung stark erhöht wird, ohne daß die Ausstoßleistung gemindert wird. Der Extruder kann somit kürzer gebaut werden und im ganzen auch kleiner dimensioniert werden. Trotzdem ist die Homogenisierung hervorragend gut.

Dieses Verhalten des Extruders dürfte darauf zurückzuführen sein, daß die in die für die Stifte vorgesehene Nut der Schnecke eintretenden groben Materialteile an einer Weiterbewegung durch die Stifte gehindert werden. Da die bereits plastifizierten und aufgeschlossenen Materialanteile durch die Gewindegänge größerer Steigung schnell in die Ausstoßzone fließen können, sammeln sich die groben unaufgeschlossenen Teile in der Stiftnut, werden von den Stiften zurückgehalten, ohne daß der Fluß plastifizierten Materials gehindert wird, und werden durch die Flanken der Gewindestege am Ort der Stiftnut mechanisch durch Zerspanung abgearbeitet und in viele kleinere, leichter aufschließbare Teile zerteilt.

Auf diese Weise werden auch in Extrudern kurzer Baulänge nie gekannte Ergebnisse des Aufschließens und Plastifizierens und Homogenisierens erreicht.

Zweckmäßig ist es, wenn vor den Stiftebenen das Schneckengewinde gute Förder- und Druckaufbaueigenschaften aufweist. Hierdurch wird erreicht, daß das gesamte eingezogene zu plastifizierende Material einer ersten Bearbeitung unterworfen wird und in dieser Stufe bereits einem Plastifizierungs- und Homogenisierungsvorgang ausgesetzt wird, unter Druck gesetzt wird und teilweise plastifiziert und teilweise unplastifiziert die erfindungsgemäße Arbeitszone erreicht, wo dann die plastifizierten Teile rasch abgeführt und die noch nicht plastifizierten Teile einer besonders intensiven Bearbeitung ausgesetzt werden.

Vorteilhaft ist es, wenn die Eintauchtiefe der Stifte in Förderrichtung vorzugsweise abschnittsweise in aufeinanderfolgenden Stiftebenen zunimmt. Hierdurch wird erreicht, daß die groben unaufgeschlossenen Anteile nach und nach in verschiedenen Stiftebenen abgebaut werden. Hierdurch wird ein Materialstau vermieden und es werden die gefürchteten Temperaturüberhöhungen an Orten vermieden, wo sich sonst grobe unaufgeschlossene Anteile stauen.

Das Wesen der Erfindung wird nachstehend anhand von in der Zeichnung schematisch dargestellten Ausführungsbeispielen näher erläutert. Es zeigen:
- Fig. 1: einen Schnitt durch den Extruder,

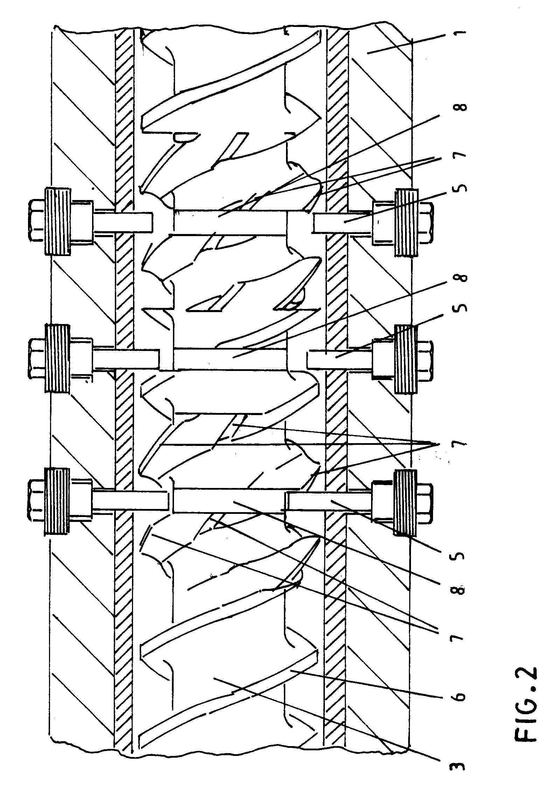

- Fig. 2: eine Ansicht (vergrößert gegenüber Fig. 1) des wesentlichen Teiles der Schnecke.

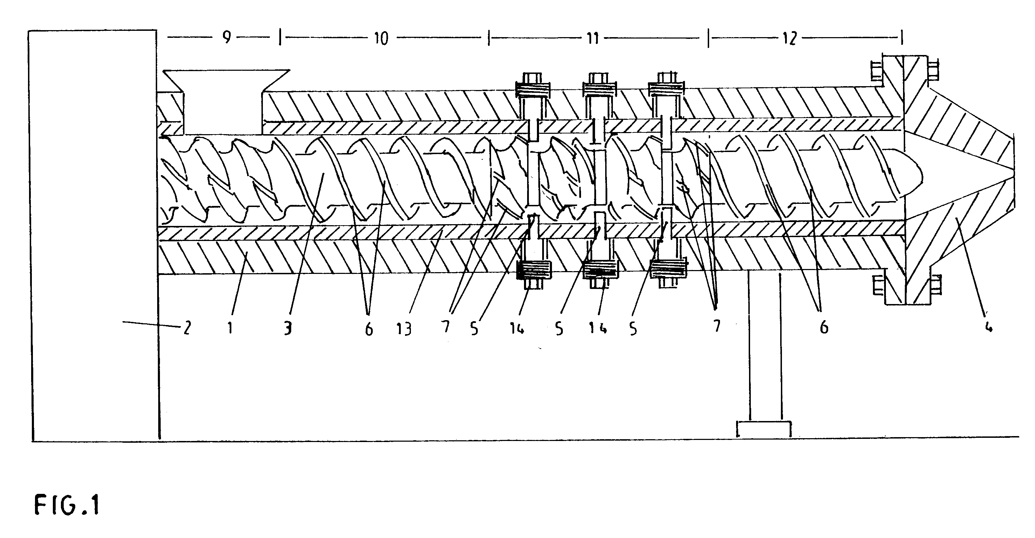

Der Extruder der Fig. 1 weist einen Zylinder 1 auf, welcher an den Antrieb 2 angeflanscht ist, eine im Zylinder 1 drehbar gelagerte Schnecke 3 sowie einen Spritzkopf 4 auf. Im Zylinder 1 sind radial in den Innenraum des Zylinder 1 radial eintauchende Stifte 5 befestigt, welche auf verschiedene Eintauchtiefen einstellbar sein können. Am Ort der Stifte 5 weist die Schnecke 3 in ihren Schneckenwindungen der Gewinde 6, 7 Nuten 8 auf, in welche die Stifte 5 eingreifen.

Die Schnecke 3 weist mehrere Zonen auf: Eine Einzugszone 9, eine Förderzone 10, die Plastifizierzone 11 und eine Ausstoßzone 12. In der Plastifizierzone 11 sind die Stifte 5 angeordnet. Zu beiden Seiten der die Stifte 5 aufnehmenden Nuten 8 ist über die Schneckenwindung des Gewindes 6 ein weiteres Gewinde 7 höherer Gangzahl und größerer Steigung, aber niedrigerer Gangtiefe und vorzugsweise auch niedrigerer Gangbreite eingeschnitten. Diese Schneckenwindungen des Gewindes 7 sitzen wie Zähne auf den Schneckenwindungen des Gewindes 6. Diese Zähne sind durch das Einschneiden des Zusätzlichen Gewindes durch Materialabtragung aus dem Grundgewinde entstanden. Gute Ergebnisse lassen sich insbesondere dann erzielen, wenn sich eingangsseitig die Fördernut zwischen zwei Windungen des Gewindes 6 der Förderzone 10 bis zur Stiftnut 8 ohne Querschnittsverengung fortsetzt, obwohl bereits vor der Stiftnut 8 Gänge des zusätzlichen Gewindes 7 niedrigerer Tiefe in die Rücken der Schneckenwindungen des Gewindes 6 eingeschnitten sind. Hinter der Stiftnut 8 können dann die tiefgeschnittenen Nuten zwischen den Schneckenwindungen des Gewindes 6 ruhig schmaler geschnitten sein, sodaß die unaufgeschlossenen Brocken, die eingangsseitig in den tiefgeschnittenen Gängen vorgeschoben werden konnten, nun in die schmaler geschnittenen Gänge hinter der Stiftnut 8 nur eintreten können, wenn die Flanken der Windungen Material von den Brocken abgeschabt und abgeschnitten haben. Dieses kann bei jeder Stiftnut 8 wiederholt werden.- Die Stifte 5 sind axial und radial in Löchern der Zylinderbuchse geführt,im Bereich des Zylinders 1 von einem Luftspalt umgeben und gegen radiale Verschiebung durch Schrauben 14 gesichert.

## Patentansprüche

1. Stiftzylinderextruder,
bestehend aus einem Zylinder und einer in diesem rotierbar gelagerten Schnecke mit einem das Extrudat fördernden Gewinde, in welches in Radialebenen Nuten eingeschnitten sind, in welche im oder am Zylinder befestigte, in den Zylinder radial hineinragende Stifte eingreifen,
dadurch gekennzeichnet,
daß mindestens zu einer Seite mindestens einer Stiftnut (8) in das Gewinde (6) der Schnecke (3) ein weiteres Gewinde (7) höherer Gangzahl und größerer Steigung, aber niedrigerer Gangtiefe eingeschnitten ist.

2. Stiftzylinderextruder nach Anspruch 1,
dadurch gekennzeichnet,
daß auch die Gangbreite des zusätzlichen Schnekkengewindes (7) niedriger als die Gangbreite zwischen den Windungen des Schneckengewindes (6) ist.

3. Stiftzylinderextruder nach Anspruch 1,
dadurch gekennzeichnet,
daß vor der Plastifizierzone (11) mit den Stiften (5) und dem doppelt geschnittenen Gewinde (6,7) eine Förderzone (10) angeordnet ist.

4. Stiftzylinderextruder nach Anspruch 1,
dadurch gekennzeichnet,
daß die Eintauchtiefe der Stifte in Förderrichtung vorzugsweise abschnittsweise in aufeinanderfolgenden Stiftebenen zunimmt.

5. Stiftzylinderextruder nach Anspruch 1,
dadurch gekennzeichnet,
daß eingangsseitig die tiefgeschnittenen Gänge zwischen den Windungen des Gewindes (6) sich bis zur Stiftnut (8) ohne Querschnitts- oder Breitenverminderung fortsetzen,
wobei vorzugsweise diese Windungen des Gewindes (6) mit zusätzlichen weniger tief geschnittenen Gängen zwischen Windungsteilen des Gewindes 7 (7) versehen sind.

6. Stiftzylinderextruder nach Anspruch 5,
dadurch gekennzeichnet,
daß ausgangsseitig die tiefgeschnittenen Gänge schmaler sind

## Claims

1. Pinned cylinder extruder consisting of a cylinder ad a screw mounted rotatably in the latter with a thread which conveys the extruded material and in which grooves are cut in radial planes, in which grooves pins secured in or on the cylinder and projecting radially into the cylinder engage, characterised in that a further thread (7) with a higher number of turns and greater pitch but lesser thread depth is cut into the thread (6) of the screw (3) at least to one side of at least one pin groove (8).

2. Pinned cylinder extruder according to claim 1, characterised in that the thread width of the additional screw thread (7) is also less than the thread width between the turns of the screw thread (6).

3. Pinned cylinder extruder according to claim 1, characterised in that a conveying zone (10) is disposed in front of the plasticising zone (11) with the pins (5) and the double cut thread (6, 7).

4. Pinned cylinder extruder according to claim 1, characterised in that the depth of insertion of the pins increases in the conveying direction, preferably in stages, in successive pin planes.

5. Pinned cylinder extruder according to claim 1, characterised in that at the inlet end the deep cut threads between the turns of the thread (6) continue to the pin groove (8) without any reduction in cross-section or width, these turns of the thread (6) preferably being provided with additional less deeply cut threads between turns of the thread (7).

6. Pinned cylinder extruder according to claim 5, characterised in that at the outlet end the deep cut threads are narrower.

## Revendications

1. Extrudeuse à cylindre à picots
se composant d'un cylindre et d'une vis sans fin montée rotative dans ce dernier et comprenant un filetage de transport du produit d'extrusion dans lequel sont taillées dans des plans radiaux des gorges dans lesquelles s'engagent des picots pénétrant radialement dans le cylindre et fixé ^{s} dans ou sur le cylindre,
caractérisée en ce que :
un autre filetage (7) ayant un nombre supérieur de filets et un pas supérieur, mais une profondeur inférieure de filets est taillé dans le filetage (6) de la vis sans fin (3) au moins sur un côté d'au moins une gorge (8) destinée aux picots

2. Extrudeuse à cylindre à picots selon la revendication 1,
caractérisée en ce que :
la largeur de filet du filetage supplémentaire (7) de la vis est aussi inférieure à la largeur du filet séparant les spires du filetage (6) de la vis.

3. Extrudeuse à cylindre à picots selon la revendication 1,
caractérisée en ce que
une zone de transport (10) est disposée en amont de la zone de plastification (11) dans laquelle se trouvent les picots (5) et le filetage (6, 7) doublement taillé.

4. Extrudeuse à cylindre à picots selon la revendication 1,
caractérisée en ce que
la profondeur de pénétration des picots croît dans le sens du transport de préférence par paliers dans des plans successifs des

5. Extrudeuse à cylindre à picots selon la revendication 1,
caractérisée en ce que
les filets taillés profondément du côté entrée entre les spires du filetage (6) se poursuivent jusqu'à la gorge (8) pour picots sans réduction de section ou de largeur,
ces spires du filetage (6) comportant des filets supplémentaires taillés moins profondément entre éléments de spires du filetage (7).

6. Extrudeuse à cylindre à picots, selon la revendication 5,
caractérisée en ce que
les filets taillés profondément du côté sortie sont relativement étroits.
